# EUROPEAN PATENT APPLICATION

(11) **EP 1 418 458 A1**
(43) Date of publication of application: **12.05.2004**
(21) Application number: 03257016.0
(22) Date of filing: 06.11.2003
(51) Int. Cl.: G02B 27/01

(54) **Direct retinal projection head mounted display**

(30) Priority: 06.11.2002 KR 2002068367
(71) Applicant: SAMSUNG ELECTRONICS CO., LTD., Suwon-City, Kyungki-do (KR)
(72) Inventor: Tomono, Takao, Gangnam-gu Seoul (KR)
(74) Representative: Geary, Stuart Lloyd

(57) **Abstract**

A head-mounted display (HMD) using retinal direct projection that provides a small and lightweight display by changing the configuration of optical components and optical arrangement. The HMD includes: a planar backlight (11) for producing and emitting light; a light-path controlling element (20) positioned in front of the planar backlight (11) for controlling the direction of incident light so that the light propagates parallel or near parallel to an optical axis; an image-forming element (13) positioned in front of the light-path controlling element (20) for forming an image; and a Fresnel lens (15) placed in front of the image-forming element (13) for focusing the image onto the retina.

## Description

The present invention relates to a direct retinal projection display device comprising a light source, light modulating means for modulating light from said source to produce an image and focusing means for focusing the image formed by the light modulating means on a user's retina.

In general, head-mounted displays (HMDs) appear in the form of eyeglasses or helmets. An HMD is a personal see-through device designed such that when it is worn by a user, the user can view video images displayed thereon. The HMD may use a magnifier, an optical relay lens, or retinal direct projection technology depending on the optical system configuration.

While a magnifier approach can produce a virtual image with a large field of view through a very small magnifying lens, it increases eye fatigue. The use of a relay lens reduces eye fatigue because a viewer can observe an image displayed on the screen from a distant position, but the size of the image is too large to fit the helmet. A retinal direct projection technique comprises displaying an image on the screen by directly projecting the image onto the retina and it not only reduces eye fatigue but also makes the size of the display smaller than when the relay lens is used.

Figure 1 shows a conventional HMD using retinal direct projection technology disclosed in JP-A-03-214872.

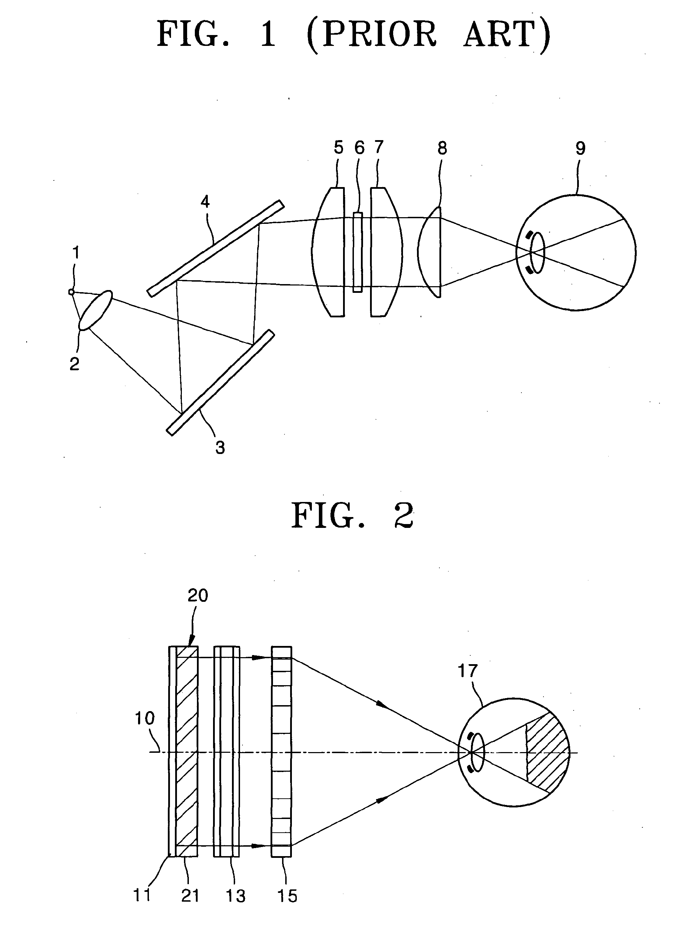

Referring to Figure 1, a prior art HMD includes a point light source 1 consisting of a tungsten lamp, a group of optical components for condensing and redirecting the light comprising a condensing lens 2 for condensing light emitted from the point light source 1, a plurality of mirrors 3 and 4 for altering the path of incident light, and eyepieces 5 and 7 consisting of lenses. The HMD device further comprises an image plate 6 positioned between the eyepieces 5 and 7 for producing an image by selectively transmitting the incident light and an additional lens 8 for focusing the image at the focal point of an eye 9.
The conventional HMD is large and heavy because it requires a plurality of optical components such as condensing lens 2, reflecting mirrors 3 and 4, and eyepiece 5 between the point light source 1 and image plate 6 in order to redirect the light from the source.

A display according to the present invention is characterised in that the light source is substantially planar and the focusing means is substantially planar.

Preferably, the focusing means comprises a Fresnel lens.

Preferably, the light source comprises a light-emitting surface and substantially planar collimating means arranged plane parallel to said surface for collimating light emitted therefrom.

Embodiments of the present invention will now be described, by way of example, with reference to Figures 2 to 5 of the accompanying drawings, in which:
Figure 1 shows the optical arrangement of a conventional head-mounted display (HMD);
Figure 2 shows the optical arrangement of a first HMD according to the present invention;
Figure 3 shows the optical arrangement of a second HMD according to the present invention;
Figure 4 shows the optical arrangement of a second HMD according to the present invention; and
Figure 5 schematically shows a sectional view of the arrays of pinholes and microlenses shown in Figure 4.

Referring to Figure 2, a first HMD according to the present invention includes a planar backlight 11 that produces and emits light, a light-path controlling element 20 that collimates the incident light, an image-forming element 13 that selectively transmits the collimated light in order to form an image, and a Fresnel lens 15 that focuses the image onto the retina of the user's eye 17.

The planar backlight 11 is preferably formed from organic or inorganic electroluminescent (EL) material. Alternatively, it may comprise a planar light guide that emits light produced by a light source at one of the ends of the light guide.

The light-path controlling element 20 comprises a layer positioned in front of the planar backlight 11 that redirects the incident light. It causes the diverging light from the planar backlight 11 to be emitted from the light-path controlling element 20 substantially parallel to an optical axis 10 or at an angle approximately 2 degrees with respect to the optical axis 10. Figure 2 shows an example in which a holographic element 21 is used as the light-path controlling element 20. The holographic element 21 diffracts the incident light through a hologram pattern into a parallel beam.

The image-forming element 13 is positioned in the optical path between the light-path controlling element 20 and the Fresnel lens 15. The image-forming element 13 is driven on a pixel-by-pixel basis to form an image by selectively transmitting the incident collimated light. The image-forming element 13 is preferably a transmissive liquid crystal display (LCD). Since the transmissive LCD is well known in the art, a detailed description will be omitted. The Fresnel lens 15 located in front of the image-forming element 13 focuses the image onto the retina of the user's eye 17.

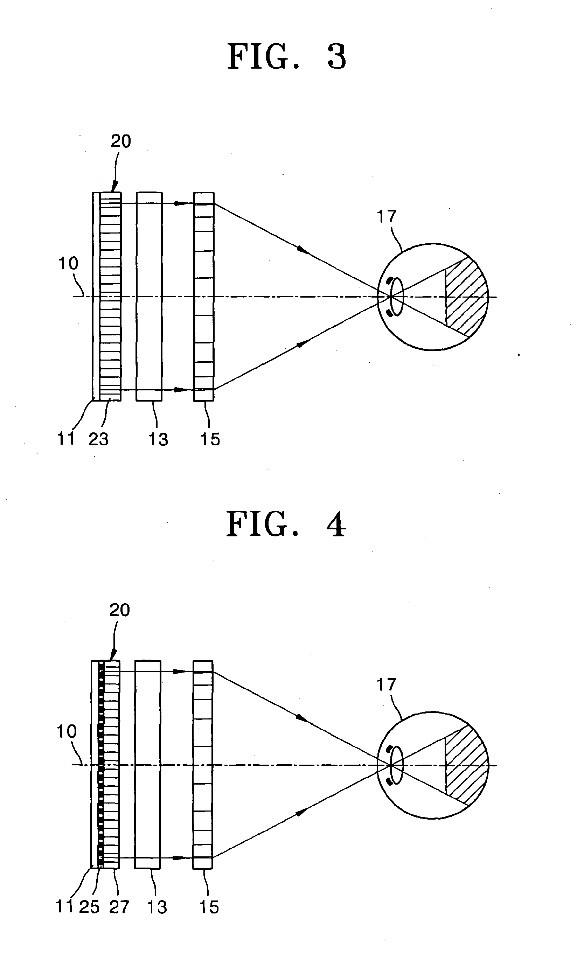

Referring to Figure 3, a second HMD according to the present invention consists of substantially the same optical components as described with reference to Figure 2. The difference is that a rubber film 23 is used as the light-path controlling element 20. The rubber film 23, possessing a high index of refraction, refracts the light incident from the planar backlight 11 towards the optical axis, thereby increasing the directivity of incident light.

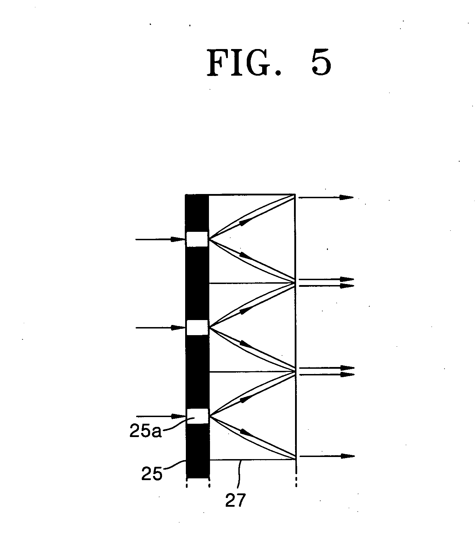

Referring to Figures 4 and 5, the optical components of a third HMD according to the present invention are also substantially the same as those described with reference to Figure 2. The difference is that the light-path controlling element now comprises an array of pinholes 25 and an array of micro lenses 27. The pinhole array 25 consists of a plurality of pinholes 25a, positioned in a plane, for transmitting the incident light. The light passing through the pinholes 25a is diffracted and starts to diverge, but is condensed by the micro lens array 27 into light parallel to the optical axis 10. The micro lens array 27 is preferably a graded index lens having a planar surface of incidence/refraction to condense the incident light. The micro lens array 27 can also be constructed to have an embossed plane of incidence and/or reflection.

As described above, HMDs according to this invention allow the image to be projected onto the retina of the user's eye, thus reducing eye fatigue.

Consequently, this invention provides a small, lightweight HMD by using a planar backlight, a light-path controlling element, and a Fresnel lens. Thus, this HMD can be designed in the form of eyeglasses and accordingly, it is easy to wear.

## Claims

1. A direct retinal projection display device comprising a light source (11, 20), light modulating means (13) for modulating light from said source (11, 20) to produce an image and focusing means (15) for focusing the image formed by the light modulating means on a user's retina, **characterised in that** the light source (11, 20) is substantially planar and the focusing means (15) is substantially planar.

2. A device according to claim 1, wherein the focusing means (15) comprises a Fresnel lens.

3. A device according to claim 1 or 2, wherein the light source (11, 20) comprises a light emitting surface and substantially planar collimating means (20) arranged plane parallel to said surface for collimating light emitted therefrom.

4. A head-mounted display comprising:
a planar backlight (11) for producing and emitting planar light,
a light-speed controlling element (20) disposed in front of the planar backlight for controlling the speed of incident light so that the incident light propagates parallel or substantially parallel to an optical axis;
an image-forming element (13) disposed in front of the light-speed controlling element for forming an image; and
a Fresnel lens (15) disposed in front of the image-forming element for focusing the image onto an eyeball (17).

5. The head mounted display of claim 4, wherein the light-speed controlling element is a holographic element that diffracts the incident light so that the incident light propagates parallel to the optical axis or diverges substantially parallel to the optical axis.

6. The head-mounted display of claim 4, wherein the light-speed controlling element is a rubber film that refracts the incident light from the planar backlight at an angle of refraction less than an angle of incidence.

7. The head-mounted display of claim 4, wherein the light-speed controlling element includes a pinhole array having a plurality of pinholes that transmit the incident light from the planar backlight and a microlens array that condenses the incident light transmitted through the plurality of pinholes.

8. The head-mounted display of claim 4, wherein the planar backlight is a light-emitting element that includes at least one of the following: organic and inorganic electroluminescence (EL) material.

9. The head-mounted display of claim 4, wherein the image-forming element is a transmissive liquid crystal display.

10. A head-mounted display comprising:
a backlight that emits a planar light;
a light controlling element that transmits incident light of the planar light so that the incident light propagates parallel or substantially parallel to an optical axis;
an image-forming element that forms an image from the incident light transmitted from the light controlling element; and
a lens that focuses the image onto an eyeball of a user.

11. The head-mounted display of claim 10, wherein the lens is a Fresnel lens.
